# EUROPEAN PATENT SPECIFICATION

(11) **EP 2 711 567 B1**
(45) Date of publication and mention of the grant of the patent: **02.09.2015**
(21) Application number: 12185602.5
(22) Date of filing: 24.09.2012
(51) Int. Cl.: F16C 3/08

(54) **Weight optimized crank-shaft**
Gewichtsoptimierte Kurbelwelle
Poids optimisé du vilebrequin

(43) Date of publication of application: 26.03.2014
(73) Proprietor: ThyssenKrupp Metalúrgica Campo Limpo Ltda., 13231-900 Campo Limpo Paulista-SP (BR)
(72) Inventor: Fonseca Galli, Luis Antonio, Sousas - Campinas SP (BR); De Souza Rodrigues, Alex, Jd Santa Teresa - Jundiai SP (BR); Stuani, Diogo, Campinas - SP, 13084-767 (BR)
(74) Representative: Braun-Dullaeus, Karl-Ulrich

(56) References cited:
- EP-A2- 0 800 008
- WO-A1-2006/057593
- FR-A1- 2 847 314

## Description

The present invention relates to a crank-shaft for an internal combustion machine having at least one main bearing journal for supporting the crank-shaft in a crank-housing and having at least one pin bearing journal for connecting a connecting rod to the crank-shaft.

### PRIOR ART

In EP 0 800 008 A2 is described a crank-shaft for an internal combustion machine, and in the transition area between the bearing journals and the crank-webs are arranged radius-shapes having varying parameters. The radius-shapes between the crank-webs and the bearing journals lead to a loss of weight, in order to obtain a light weight crank-shaft. The radial position of a deep or a flat radius-shape depends on the load-direction affecting the bearing journals, in order to avoid a weakening of said transition areas between the bearing journals and the crank-webs.

Document US 4, 356, 741 A1 describes a crank-shaft featuring recesses in the bearing journals and recesses or apertures in between the bearing journals. The recesses and apertures lead to a loss of weight in order to provide a light-weight crank-shaft.

Document FR 2 847 314 A1 discloses a crank-shaft for an internal combustion machine with main bearing journals for supporting the crank-shaft in a crank-housing and with pin bearing journals for connecting connecting-rods to the crank-shaft. The main bearing journals and the pin bearing journals feature areas of high mechanical load. Recesses are applied in the journals to decrease maximum stress peaks within the material, in particular in the transition from bearing journals to the crank-webs.
The recesses must be positioned in the areas of high mechanical load.

Unfortunately, crank-shafts having deep recesses, apertures or radii in parts of the crank-webs lead to a high weakness of the crank-shaft body and depending from gas-forces or inertia forces the crank-shaft must be designed with increased cross-sectional areas.

### DISCLOSURE OF INVENTION

Thus, the invention has the objective to eliminate the above mentioned disadvantages. In particular it is an objective of the present invention to provide a weight optimized crank-shaft featuring a minimal weakening effect.

This objective is achieved by a crank-shaft as taught by claim 1 of the present invention. Preferred embodiments of the invention are defined by the sub claims.

The invention discloses a crank-shaft for an internal combustion machine having at least one main bearing journal for supporting the crank-shaft in a crank-housing and having at least one pin bearing journal for connecting a connecting rod to a crank-shaft, whereas at least one of the bearing journal surfaces comprises at least one recess area with a depth of at least 1 mm.

According to the invention at least one main bearing journal and/or at least one pin bearing journal features one or more recess areas leading to a material absence region. The recess areas are disposed in regions with less mechanical stress and/or less stress caused by hydrodynamic oil pressure, and thus the recess areas are defined in regions in accordance with the load-variation changing over the revolution of the crank-shaft. Due to the depth and the width of the recess areas the material absence of each recess in the bearing surface leads to a lightening effect for minimizing the weight of the entire crank-shaft, and due to the massive cross section design of the bearing journals the material absence regions according to the invention do not lead to a destructive weakening of the entire crank-shaft. In particular when the recess areas are defined in regions according with the load directions of the crank-shaft, the weakening effect of the crank-shaft caused by the recesses in the bearing surface can be minimized.

According to a preferred embodiment of the inventive crank-shaft in at least one bearing journal surface are arranged two recess areas. Preferably the two recess areas are defined in opposite positions according to the shaft axis, depending on the specific load-behavior of the crank-shaft caused by gas-forces of the internal combustion of the machine and/or caused by inertia forces. Experiments have shown that a roughly opposite position of two recess areas in one bearing journal surface leads to an optimized loss of weight combined with a minimum weakening effect.

According to yet another embodiment in at least one bearing journal surface are arranged two recess areas, and one recess area forms a larger recess area and one recess area forms a smaller recess area. Moreover, in the surfaces of the main bearing journals can be defined recess areas with different sizes and/or different shapes compared to recess areas in the surfaces of pin bearing journals. As a consequence of calculating a minimized weight of the crank-shaft combined with a minimum weakening effect of the crank-shaft, each of the main bearing journals and/or the pin bearing journals may feature recess areas in different numbers, in different sizes and in particular with different depths.

According to another improvement of the inventive crank-shaft the depth of the at least one recess area amounts to 3mm to 30mm, preferably to 6mm to 20mm and most preferred to 9mm to 15mm. As an example the small recess areas can feature a depth of about 9mm and the large recess areas can feature a depth up to 15mm.

Moreover the at least one recess area can feature a circumferential arc shape, preferably such that the depth forms a radius of the arc shaped or semicircular shaped recess area. In the transition of the arc shape or semicircular shape of the recess area into the surface of the bearing journal can be arranged a transition radius in order to avoid sharp edges.

According to the invention the main bearing journal and/or the pin bearing journal features at least one area of high mechanical load whereas the at least one recess area is arranged in a lateral position relative to the area of high mechanical load in relation to the round shape of the bearing journals. Relating to one revolution of the crank-shaft at least one zone of minimum load and one zone of maximum load can affect the bearing journal. The zones of high mechanical load affecting the bearing journal are not combined with a position of a recess area leading to a weakening of the bearing load rating, but the recess areas are positioned lateral to the zones of high mechanical load in order to avoid damaging the crank-shaft. In particular the recess areas are positioned in the areas of minimum load affecting the bearing journal.

The area of high mechanical load is caused by combustion strokes and/or by gas exchange strokes of the internal combustion machine. Moreover a high mechanical load can be also caused by inertia forces of the connecting rod and/or the piston. The areas of high and low mechanical loads can be different between the main bearing journals and the pin bearing journals, and for each bearing journal the number, the position, the depth and the width of the at least one recess area is calculated depending on the angle position of the crank-shaft and of each bearing journal between the Top Dead Center (TDC) and the Bottom Dead Center (BDC).

Preferably the width of the at least one recess area is smaller than the width of the bearing journal surface relating the direction of the rotation axis. The remaining area between the width of the recess area and the axial limiting edge of the bearing journal surface leads to a rest contact area in the surface, forming a rest load surface in particular to keep up the guiding effect of the bearing over the entire revolution of the crank-shaft.

The bearing journal surface comprising a recess area forms the load surface which is affected by the mechanical load due to the gas-forces and/or inertia forces caused by the mass of the connecting rod and the piston. Thus, the at least one recess area in the bearing journal surface is located directly in the contact surfaces of the bearing journal and the outer bearing ring.

The aforementioned components as well as the claimed components and the components to be used in accordance with the invention in the described embodiments are not subject to any special exceptions with respect to their size, shape, material selection and technical concept such that the selection criteria known in the pertinent field can be applied without limitations.

### PREFERRED EMBODIMENT OF THE INVENTION

Additional details, characteristics and advantages of the object of the invention are disclosed in the subclaims and the following description of the respective figures, which show a preferred embodiment in an exemplary fashion of the subject matter according to the invention in conjunction with the accompanying figures, in which
- figure 1: shows an embodiment of a crank-shaft with the features of the present invention,
- figure 2: shows a cross-section of a bearing journal of the crank-shaft and
- figure 3: shows a schematically view of a plain bearing with a bearing journal rotating in an outer bearing ring.

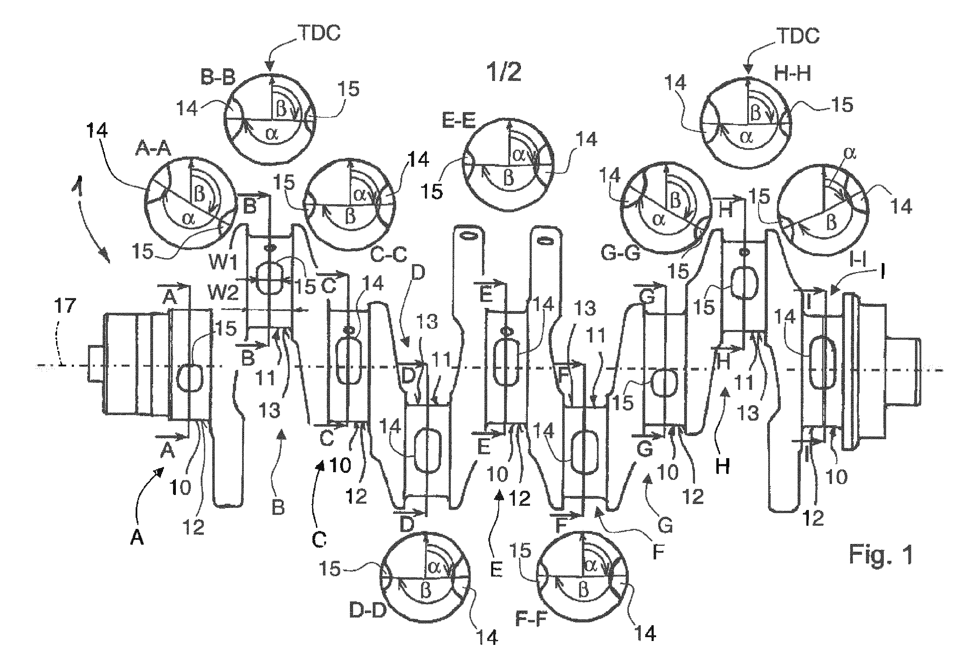

Figure 1 shows an embodiment of a crank-shaft 1 for an internal combustion machine, and the crank-shaft 1 is performed for the use in a four-cylinder machine. The crank-shaft 1 features five main bearing journals 10, which are defined as bearing A, bearing C, bearing E, bearing G and bearing I as identified from the left to the right side of the crank-shaft 1. The crank-shaft 1 is rotatably supported in a rotation axis 17 in a crank-housing (not shown) by means of said main bearing journals 10.

In between the main bearing journals 10 the crank-shaft 1 features pin bearing journals 11 for connecting a connecting rod and which are defined as bearing B, bearing D, bearing F and bearing H as identified from the left to the right side of the crank-shaft 1. The pin bearing journal 11 in the positions B and H are shown in a Top Dead Center (TDC) position and the pin bearing journals 11 in the positions D and F are shown in a Bottom Dead Center (BDC) according to the rotation position of the crank-shaft 1.

Each of the bearing journals 10 and 11 are additionally shown in a cross-section view depicted above and below the dedicated journals 10, 11.

As shown in each of the main bearing journals 10 and in each of the pin bearing journals 11 recess areas 14, 15 are defined in the surfaces 12 and 13 of the bearing journals 10, 11. The recess areas 14 and 15 are divided in large recess areas 14 and small recess areas 15, whereas the size of the large recess areas 14 and the small recess areas 15 can vary from recess area to recess area, and the classification in large and small recess areas 14 and 15 is only to be understood approximately.

The main bearing journals 10 feature a surface 12 and the pin bearing journals 11 feature a surface 13, whereas the surfaces 12 and 13 form the mechanically loaded surfaces of the plain bearings 10, 11. Each recess area 14 and 15 forms a material absence region within said surfaces 12 and 13, and the recess areas 14 and 15, located in the cross-sections A-A, B-B, C-C, D-D, E-E, F-F, H-H and I-I of the bearing journals 10, 11, are depicted in each of the cross-sections of the journals 10 and 11. The embodiments of the recess areas 14 and 15 feature a semicircular shape in the surfaces 12 and 13 with a depth and a width, which are different to each other and the recess areas 14, 15 are subdivided in large recess areas 14 and small areas 15.

As shown in the cross-sections, the large recess areas 14 and the small recess areas 15 are defined at certain positions relative to a top position, shown as an arrow in the cross-sections, whereas the top position points into the direction of the Top Dead Center (TDC), as shown in the cross-section of the pin bearing journals 11 in the positions B and H.

The angle α is defined between the Top Dead Center (TDC) and the position of the large recess area 14 and the angle β is defined between the Top Dead Center (TDC) and the small recess area 15 with respect to the present rotating position of the crank-shaft 1. In the following table different angles α and β are defined for the embodiment of the four-cylinder crank-shaft 1.

**Angles α and β in mm as shown in Figure 1**

| **Angle** | **Bearing A** | **Bearing B** | **Bearing C** | **Bearing D** | **Bearing E** | **Bearing F** | **Bearing G** | **Bearing H** | **Bearing I** |
|---|---|---|---|---|---|---|---|---|---|
| α(°) | 99 | 93 | 75 | 88 | 75 | 88 | 99 | 93 | 73 |
| β(°) | 287 | 272 | 288 | 267 | 288 | 267 | 287 | 272 | 261 |

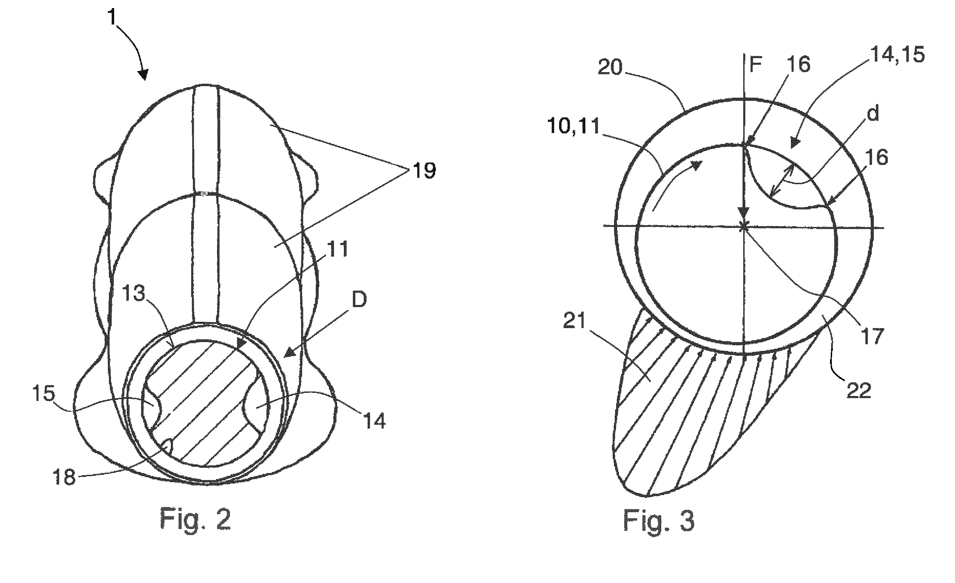

The recess areas 14, 15 are shown with a width w1 which is smaller than the width w2 of the bearing journal surfaces 12 and 13 measured in the direction of the rotation axis 17. The extension of the recess areas 14 and 15 in circumference direction can measure about to 100mm for bearing journals 10 and 11 with a diameter of around 60mm. The weight reduction caused by the recess areas can amount up to 600g which represents a reduction of 1, 53% on the entire crank-shaft 1 weight. In the following figure 2 is shown a cross-sectional view in the section line F-F exemplarily.

Figure 2 shows a cross-sectional view of the pin bearing journal 11 in the position F. On the right side in the cross section is defined a large recess area 14 and on the left side in the cross section is defined a small recess area 15. Below the small recess area 15 is shown the opening of an oil-passage 18, and oil can pass the oil-passage 18 to lubricate the surface 13 of the pin bearing journal 11. Behind the cross-section area of the pin bearing journal 11 of the crank-shaft 1 is shown a first crank web 19 and behind a - not shown- main bearing journal is arranged another crank web 19 for connecting the main bearing journals 10 with a neighboring pin bearing journal 11. The embodiment shows two recess areas 14, 15 in opposite positions with respect to the circumference of the journal 11, whereas said recess area 14 and 15 are defined with different diameters.

Figures 3 shows a schematic view of a plain bearing with a bearing journal 10, 11 rotating in an outer bearing ring 20. The rotation of the bearing journals 10, 11 in the rotation axis 17 is defined by an arrow. The bearing journal 10, 11 is shown with a single recess area 14, 15 in an exemplary fashion only, moreover the depth d of the recess area 14, 15 is defined. The transition between the semicircular shaped recess area 14, 15 and the surface of the main bearing journal features a transition radius 16 in order to avoid sharp edges tracing the recess area 14, 15.

The bearing journal 10, 11 is loaded by a force F, and due to the load the bearing journal 10, 11 feature an eccentric position in the outer bearing ring 20 leading to a convergent region 22. Due to a so called wedge effect in the convergent region 22 a hydrodynamic oil pressure field 21 occurs. Due to the hydrodynamic pressure effect in the pressure field 21 the bearing journal 10, 11 is supported in the outer bearing ring 20. When the plain bearing formed by the bearing journal 10, 11 and the outer bearing ring 20 is applied in a crank-housing for supporting a crank-shaft 1 or is applied in a connecting rod for connecting said connecting rod to the crank-shaft 1, the position of the pressure field 21 varies in different angles and thus in different positions surrounding the bearing journal 10, 11. In the sense of the present invention the position of the recess area 14, 15 is defined in a region without a hydrodynamic pressure, and for the shown embodiment of only one recess area 14, 15 the position of the hydrodynamic oil pressure field 21 is located diametrically opposite to the recess area 14, 15.

With regard to the different positions of the small and large recess areas 14 and 15 of the main bearing journals 10 and the pin bearing journals 11 of the crank shaft 1 in figure 1 the positions of the recess areas 14 and 15 are defined in regions according to the circumference of the bearings 10, 11, where no hydrodynamic oil pressure fields 21 occurs.

Due to the special positioning of the recess areas 14, 15, which may vary from bearing to bearing A to I, the positions of the recess areas 14 and 15 leading to material absence regions are calculated by a computer program in such a way, that the hydrodynamic oil pressure field between the bearing journal 10, 11 and the outer bearing ring 20 is maintained.

The present invention is not limited by the embodiment described above, which is represented as an example only and can be modified in various ways within the scope of protection defined by the appending patent claims.

### List of numerals

- 1: crank-shaft
- 10: main bearing journal
- 11: pin bearing journal
- 12: surface of the main bearing journal
- 13: surface of the pin bearing journal
- 14: recess area, large
- 15: recess area, small
- 16: transition radius
- 17: rotation axis
- 18: oil passage
- 19: crank web
- 20: outer bearing ring
- 21: hydrodynamic oil pressure field
- 22: convergent region

- F: force
- d: depth
- x: area of high mechanical load
- w1: width of the at least one recess area
- w2: width of the bearing journal surface
- TDC: Top Dead Center
- BDC: Bottom Dead Center
- α: angle between TDC and large recess area
- β: angle between TDC and small recess area

## Claims

1. A crank-shaft (1) for an internal combustion machine having at least one main bearing journal (10) for supporting the crank-shaft (1) in a crank-housing and having at least one pin bearing journal (11) for connecting a connecting rod to the crank-shaft (1), the main bearing journal (10) and/or the pin bearing journal (11) features at least one area (x) of high mechanical load,
**characterized in that** at least one of the bearing journal surfaces (12, 13) comprises at least one recess area (14, 15) with a depth (d) of at least 1 mm, and the at least one recess area (14, 15) is arranged in a lateral position relative to the area (x) of high mechanical load.

2. A crank-shaft (1) according to claim 1, **characterized in that** in at least one bearing journal surface (12, 13) are arranged two recess areas (14, 15).

3. A crank-shaft (1) according to claim 1 or 2, **characterized in that** in at least one bearing journal surface (12, 13) is arranged a larger recess area (14) and a smaller recess area (15).

4. A crank-shaft (1) according to one of the previous claims, **characterized in that** the depth (d) of the at least one recess area (14, 15) amounts to 3mm to 30mm, preferably to 6mm to 20mm and most preferred to 9mm to 15mm.

5. A crank-shaft (1) according to claim 4, **characterized in that** the at least one recess area (14, 15) features a semicircular shape, preferably such that the depth (d) forms a radius of the semicircular shaped recess area (14, 15).

6. A crank-shaft (1) according to one of the previous claims, **characterized in that** the area (x) of high mechanical load is loaded by a combustion stroke and/or by a gas exchange stroke of the internal combustion machine.

7. A crank-shaft (1) according to one of the previous claims, **characterized in that** the width (w1) of the at least one recess area (14, 15) is smaller than the width (w2) of the bearing journal surface (12, 13).

## Patentansprüche

1. Kurbelwelle (1) für eine Verbrennungskraftmaschine mit mindestens einem Hauptwellenzapfen (10) zum Lagern der Kurbelwelle (1) in einem Kurbelgehäuse und mit mindestens einem Hubzapfen (11) zum Verbinden einer Pleuelstange mit der Kurbelwelle (1), wobei der Hauptwellenzapfen (10) und/oder der Hubzapfen (11) mindestens einen Bereich (x) großer mechanischer Last aufweisen/aufweist,
**dadurch gekennzeichnet, dass** mindestens eine der Lageroberflächen (12, 13) mindestens einen Aussparungsbereich (14, 15) mit einer Tiefe (d) von mindestens 1 mm umfasst, und dass der mindestens eine Aussparungsbereich (14, 15) in einer seitlichen Position im Verhältnis zu dem Bereich (x) großer mechanischer Last angeordnet ist.

2. Kurbelwelle (1) nach Anspruch 1, **dadurch gekennzeichnet, dass** in mindestens einer Lageroberfläche (12, 13) zwei Aussparungsbereiche (14, 15) angeordnet sind.

3. Kurbelwelle (1) nach Anspruch 1 oder 2, **dadurch gekennzeichnet, dass** in mindestens einer Lageroberfläche (12, 13) ein größerer Aussparungsbereich (14) und ein kleinerer Aussparungsbereich (15) angeordnet sind.

4. Kurbelwelle (1) nach einem der vorhergehenden Ansprüche, **dadurch gekennzeichnet, dass** die Tiefe (d) des mindestens einen Aussparungsbereichs (14, 15) im Bereich von 3 mm bis 30 mm, vorzugsweise von 6 mm bis 20 mm, und bevorzugter von 9 mm bis 15 mm beträgt.

5. Kurbelwelle (1) nach Anspruch 4, **dadurch gekennzeichnet, dass** der mindestens eine Aussparungsbereich (14, 15) eine halbkreisförmige Gestalt vorzugsweise dergestalt aufweist, dass die Tiefe (d) einen Radius des halbkreisförmig gestalteten Aussparungsbereichs (14, 15) ausbildet.

6. Kurbelwelle (1) nach einem der vorhergehenden Ansprüche, **dadurch gekennzeichnet, dass** der Bereich (x) großer mechanischer Last durch einen Verbrennungshub und/oder Gasaustauschhub der Verbrennungskraftmaschine beaufschlagt ist.

7. Kurbelwelle (1) nach einem der vorhergehenden Ansprüche, **dadurch gekennzeichnet, dass** die Breite (w1) des mindestens einen Aussparungsbereichs (14, 15) kleiner als die Breite (w2) der Lageroberfläche (12, 13) ist.

## Revendications

1. Vilebrequin (1) pour un moteur à combustion interne ayant au moins un tourillon principal (10) pour soutenir le vilebrequin (1) dans un logement de vilebrequin et ayant au moins une goupille (11) pour raccorder une tige de raccordement au vilebrequin (1), le goupillon (10) et/ou la goupille (11) présente au moins une zone (x) de charge mécanique élevée,
**caractérisé en ce que** au moins une des surfaces de tourillon (12, 13) comprend au moins une zone d'évidement (14, 15) avec une profondeur (d) d'au moins 1mm, et la au moins une zone d'évidement (14, 15) est agencée dans une position latérale par rapport à la zibe (x) de charge mécanique élevée.

2. Vilebrequin (1) selon la revendication 1, **caractérisé en ce que** dans au moins une surface de tourillon (12, 13) sont ménagées deux zones d'évidement (14, 15).

3. Vilebrequin (1) selon la revendication 1 ou 2, **caractérisé en ce que** dans au moins une surface de tourillon (12, 13) est ménagée une zone d'évidement (14) plus grande et une zone d'évidement plus petite (15).

4. Vilebrequin (1) selon une des revendications précédentes, **caractérisé en ce que** la profondeur (d) d'au moins une zone d'évidement (14, 15) est comprise entre 3mm et 30mm, de préférence entre 6mm et 20mm et de manière encore préférée entre 9mm et 15mm.

5. Vilebrequin (1) selon la revendication 4, **caractérisé en ce que** au moins une zone d'évidement (14, 15) présente une forme semi circulaire, de préférence de sorte que la profondeur (d) forme un rayon de la zone d'évidement de forme semi circulaire (14, 15).

6. Vilebrequin (1) selon une des revendications précédentes, **caractérisé en ce que** la zone (x) de charge mécanique élevée est chargée par une course de combustion et/ou par une course d'échange de gaz du moteur à combustion interne.

7. Vilebrequin (1) selon une des revendications précédentes, **caractérisé en ce que** la largeur (w1) d'au moins une zone d'évidement (14, 15) est plus petite que la largeur (w2) de la surface de tourillon (12, 13).
